(19) Europäisches Patentamt
European Patent Office
Office européen des brevets

(11) EP 2 540 385 B1

(12) **EUROPEAN PATENT SPECIFICATION**

(45) Date of publication and mention of the grant of the patent:
**12.08.2020 Bulletin 2020/33**

(21) Application number: **11747242.3**

(22) Date of filing: **17.02.2011**

(51) Int Cl.:
***B01D 71/56*** (2006.01) ***B01D 69/12*** (2006.01)
***C08G 69/26*** (2006.01) ***B01D 67/00*** (2006.01)
***B01D 69/02*** (2006.01) *C08G 69/28* (2006.01)

(86) International application number:
**PCT/JP2011/053375**

(87) International publication number:
**WO 2011/105278 (01.09.2011 Gazette 2011/35)**

(54) **COMPOSITE SEMIPERMEABLE MEMBRANE AND PROCESS FOR PRODUCTION THEREOF**
HALBDURCHLÄSSIGE VERBUNDMEMBRAN UND HERSTELLUNGSVERFAHREN DAFÜR
MEMBRANE SEMIPERMÉABLE COMPOSITE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2010 JP 2010060296**
**23.02.2010 JP 2010036952**

(43) Date of publication of application:
**02.01.2013 Bulletin 2013/01**

(73) Proprietor: **Toray Industries, Inc.**
**Tokyo, 103-8666 (JP)**

(72) Inventors:
- **OGAWA, Takafumi**
**Otsu-shi**
**Shiga 520-8558 (JP)**
- **TOMIOKA, Hiroki**
**Otsu-shi**
**Shiga 520-8558 (JP)**
- **KIMURA, Masahiro**
**Otsu-shi**
**Shiga 520-8558 (JP)**
- **HIGASHI, Masaki**
**Iyo-gun**
**Ehime 791-3193 (JP)**
- **TAKAYA, Kiyohiko**
**Otsu-shi**
**Shiga 520-8558 (JP)**
- **KOIWA, Masakazu**
**Otsu-shi**
**Shiga 520-8558 (JP)**

(74) Representative: **Hoefer & Partner Patentanwälte mbB**
**Pilgersheimer Straße 20**
**81543 München (DE)**

(56) References cited:
**EP-A1- 0 382 009** **EP-A2- 0 275 027**
**EP-A2- 0 718 029** **JP-A- 8 224 452**
**JP-A- 2001 179 061** **JP-A- 2001 179 061**
**JP-A- 2002 095 938** **JP-A- 2002 177 749**
**JP-A- 2005 177 741** **JP-A- 2005 186 059**
**JP-A- 2005 186 059** **JP-A- 2006 021 094**
**JP-A- 2007 090 192** **JP-A- 2009 057 654**
**US-A1- 2003 136 727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 540 385 B1

## Description

TECHNICAL FIELD

The present invention relates to a composite semipermeable membrane useful for selective separation of a liquid mixture. The composite semipermeable membrane obtained by the present invention can be suitably used in desalination, for example, of sea water or brackish water.

BACKGROUND ART

Regarding separation of a mixture, there are various techniques for removing substances (for example, salts) dissolved in a solvent (for example, water), and the use of a membrane separation process as a process for energy saving and resource saving has recently been expanding. Examples of the membrane used in the membrane separation process include, for example, a microfiltration membrane, an ultrafiltration membrane, a nanofiltration membrane, and a reverse osmosis membrane, which membranes have been used in obtaining drinking water, for example, from sea water, brackish water, and water containing harmful substances and in the production of industrial ultrapure water, wastewater treatment, recovery of valuables, and the like.

Most of the reverse osmosis membranes and nanofiltration membranes that are commercially available at present are composite semipermeable membranes and they fall within two types: one having on a porous support membrane a gel layer and an active layer in which polymers are cross-linked; and the other having on a porous support membrane an active layer in which monomers are polycondensed. Above all, a composite semipermeable membrane obtained by coating a porous support membrane with a separating functional layer composed of cross-linked polyamide obtained by polycondensation reaction of polyfunctional amines with polyfunctional acid halides has been widely used as a separation membrane having high permeability and selective separation properties.

Boron, which is toxic to human bodies, plants, and animals in that, for example, it causes neuropathy and growth inhibition, is contained in large amounts in sea water, and therefore it is important to remove boron in seawater desalination. Thus, various means of improving boron removal performance of composite semipermeable membranes have been purposed (Patent Documents 1, 2).

PRIOR ART DOCUMENTS

PATENT DOCUMENTS

For example, Patent Document 1 a method of heat treating a composite semipermeable membrane formed by interfacial polymerization to improve the performance. Patent Document 2 discloses a method of contacting a composite semipermeable membrane formed by interfacial polymerization with a bromine-containing free chlorine water solution.

In water generation plants where reverse osmosis membranes are used, higher water permeation performance is demanded in order to further reduce running costs. For such a demand, a method is known which involves treating a composite semipermeable membrane provided with cross-linked polyamide polymer as a separation active layer by contacting it with an aqueous solution containing nitrous acid (Patent Document 3).

One of the factors that influence the water permeability of a composite semipermeable membrane is a pleated structure. It is suggested that enlarging pleats increases substantial membrane area and water permeability (Patent Document 4).

Patent Document 1: JP 11-19493 A
Patent Document 2: JP 2001-259388 A
Patent Document 3: JP 2007-090192 A
Patent Document 4: JP 09-19630 A EP0275027 and JP2005186059 disclose after-treated membranes with nitrous acid to obtain diazonium salts.

SUMMARY OF THE INVENTION

PROBLEMS TO BE SOLVED BY THE INVENTION

However, even the membranes described in Patent Document 1 and Patent Document 2 have a membrane permeate flux of 0.5 $m^3/m^2$/day or less and a boron removal rate of at most about 91 to 92% when the sea water of 25°C, pH: 6.5, boron concentration: 5 ppm, and TDS concentration: 3.5% by weight is passed therethrough at an operating pressure of 5.5 MPa, and there has been a need for development of a composite semipermeable membrane having

even higher boron rejection performance.

Although the treatment described in Patent Document 3 improves water permeation performance while maintaining the boron removal rate before treatment, still higher boron removal rates and higher water permeation performance have been demanded.

The technique described in Patent Document 4, i.e., adding various additives during interfacial polymerization enlarges pleats and improves water permeability, but there is a concern about decrease in removal rate.

An object of the present invention is to overcome these drawbacks of the prior art and provide a composite semipermeable membrane having high boron removal performance and high water permeation performance.

MEANS FOR SOLVING THE PROBLEMS

To solve the above-described problems, the composite semipermeable membrane according to the present invention has the constitution [1] below:

[1] A composite semipermeable membrane having a chemically treated polyamide separation-functional layer on a porous support layer, wherein the polyamide separation-functional layer has a yellow index, measured according to Japanese Industrial Standard JIS K 7373, of 10 to 40, and the actual length of the polyamide separation-functional layer per 1 μm-length of the porous support layer, measured with a cross-section photograph of an ultrathin section using a TEM of a sample embedded in a water-soluble polymer, stained with $OsO_4$, and cut with an ultramicrotome, is from 2 μm to 5 μm, wherein the polyamide separation-functional layer having primary amino groups retained as a compound in the separation-functional layer of the composite semipermeable membrane, is chemically treated by contacting it with a reagent that reacts with the primary amino groups and forms a diazonium salt or derivatives thereof and further reacted with an aromatic compound that reacts with the diazonium salt or derivatives thereof to form azo groups.

In the composite semipermeable membrane according to the present invention, it is preferred that a substrate of the porous support layer be formed from polyester and that the substrate be a filament nonwoven fabric.

Further, in the above-described composite semipermeable membrane according to the present invention, it is preferred that the substrate comprise a filament nonwoven fabric.

In the above-described composite semipermeable membrane according to the present invention, for the substrate comprising a filament nonwoven fabric, it is preferred that the degree of fiber orientation of the fibers arranged on the opposite side to the porous support be from 0° to 25°, wherein the degree of fiber orientation is the average angle of the fibers constituting the nonwoven fabric substrate determined when the film-forming direction and the direction perpendicular to the film-forming direction is assumed to be 0° and 90° respectively, and that the difference in the degree of orientation from the fibers arranged on the porous support side be from 10° to 90°.

In the above-described composite semipermeable membrane according to the present invention the polyamide separation-functional layer is preferably prepared by polycondensation of polyfunctional amines with polyfunctional halides, wherein the polyamide separation-functional layer is formed by the steps of (A) interfacial polycondensation in which polyfunctional amines and polyfunctional acid halides are brought into contact at 40°C to 70°C and subsequent (B) heat treatment at 70°C to 150°C (constitution [2]).

Further described but not part of the present invention is a method of producing the composite semipermeable membrane [1] according to the present invention which has either of the constitution [3] or [4] below:

[3] A method of producing a composite semipermeable membrane, comprising the steps of: contacting an aqueous polyfunctional amine solution with a polyfunctional acid halide-containing solution to form a polyamide separation-functional layer on a porous support layer, followed by contacting the polyamide separation-functional layer with a compound having primary amino groups; contacting with a reagent that reacts with the primary amino groups and forms a diazonium salt or derivatives thereof; and contacting with a reagent that reacts with the diazonium salt or derivatives thereof, wherein the temperature of the membrane surface immediately after contacting the aqueous polyfunctional amine solution with the polyfunctional acid halide-containing solution is in the range of 25 to 60°C, and the concentration of the compound having primary amino groups in a complex of the polyamide separation-functional layer and the porous support layer after contacting the polyamide separation-functional layer with the compound having primary amino groups is in the range of $30 \times 10^{-6}$ to $160 \times 10^{-6}$ mol/g, or

[4] A method of producing a composite semipermeable membrane, comprising the steps of: contacting an aqueous polyfunctional amine solution with a polyfunctional acid halide-containing solution to form a polyamide separation-functional layer on a porous support layer, followed by contacting the polyamide separation-functional layer with a compound having primary amino groups; contacting with a reagent that reacts with the primary amino groups and forms a diazonium salt or derivatives thereof; and contacting with a reagent that reacts with the diazonium salt or derivatives thereof, wherein the aqueous polyfunctional amine solution and/or polyfunctional acid halide-containing solution contain an acylation catalyst, and the concentration of the compound having primary amino groups in a

complex of the polyamide separation-functional layer and the porous support layer after contacting the polyamide separation-functional layer with the compound having primary amino groups is in the range of $30 \times 10^{-6}$ to $160 \times 10^{-6}$ mol/g.

EFFECTS OF THE INVENTION

According to the present invention, a composite semipermeable membrane having high boron removal performance and high water permeation performance can be obtained, and energy saving and improvement of the quality of permeate water can be achieved by using this membrane.

BRIEF DESCRIPTION OF THE DRAWINGS

Figure 1 is a schematic view illustrating the actual length of the separating functional layer surface.

BEST MODE FOR CARRYING OUT THE INVENTION

The composite semipermeable membrane according to the present invention is [1] a composite semipermeable membrane having a polyamide separation-functional layer on a porous support layer, wherein the polyamide separation-functional layer has a yellow index of 10 to 40, and the actual length of the polyamide separation-functional layer per 1 μm-length of the porous support layer is from 2 μm to 5 μm.
Said polyamide separation-functional layer may be prepared by polycondensation of polyfunctional amines with polyfunctional acid halides, wherein the polyamide separation-functional layer is formed by the steps of (A) interfacial polycondensation in which polyfunctional amines and polyfunctional acid halides are brought into contact at 40°C to 70°C and subsequent (B) heat treatment at 70°C to 150°C.

In the present invention, the porous support membrane substantially does not have separation performance for ions and the like and is for the purpose of imparting strength to a separating functional layer that substantially has separation performance. Although the size and distribution of the pores are not particularly restricted, preferred is, for example, such a porous support membrane that has uniform micropores or micropores gradually increasing in size from the surface on which the separating functional layer is formed to the other surface, wherein the size of the micropores on the surface on which the separating functional layer is formed is from 0.1 nm to 100 nm.

Materials used in the porous support layer and shapes thereof are not particularly limited, and a film in which a porous support is formed on a substrate is one example.

Examples of the substrate include a fabric mainly composed of at least one selected from polyester and aromatic polyamide. It is particularly preferable to use polyester having high mechanical and thermal stability. As a fabric used for the substrate, a filament nonwoven fabric or a staple fiber nonwoven fabric can preferably be used, and, in particular, a filament nonwoven fabric can more preferably be used because the substrate requires such excellent film-forming properties that the strike-through of a macromolecule polymer solution due to excessive permeation upon casting it, the peeling-off of the porous support layer, or further defects such as ununiformity of the membrane and pinholes due to, for example, fluffing of the substrate will not occur. If the substrate comprises a filament nonwoven fabric composed of thermoplastic continuous filaments, the ununiformity upon casting a macromolecule solution resulting from fluffing, which occurs when a staple fiber nonwoven fabric is used, and the membrane defects can be prevented. Further, in the continuous film formation of a composite semipermeable membrane, a filament nonwoven fabric which has more excellent dimension stability is preferably used as a substrate because a tension is applied in the film-forming direction, and, in particular, the fact that the fibers arranged on the opposite side to the porous support are longitudinally oriented in the film-forming direction allows maintenance of the strength and prevention of film breakage and the like. The degree of fiber orientation of the fibers arranged on the opposite side to the porous support of the substrate is preferably in the range of 0° to 25°. The degree of fiber orientation herein is an index indicating the direction of the fibers of a nonwoven fabric substrate constituting the porous support layer and refers to the average angle of the fibers constituting the nonwoven fabric substrate determined when the film-forming direction and the direction perpendicular to the film-forming direction, i.e., the width direction of the nonwoven fabric substrate during continuous film formation is assumed to be 0° and 90°, respectively. Thus, it is shown that the closer the degree of fiber orientation is to 0°, the more the orientation is longitudinal, and the closer to 90°, the more the orientation transverse. In the process for producing the composite semipermeable membrane and the process for producing the element, a heating step is involved and a phenomenon where the heating shrinks the porous support layer or the composite semipermeable membrane occurs. It is particularly noticeable in the width direction in which a tension is not applied during continuous film formation. The shrinking causes a problem, for example, with dimension stability, and therefore the substrate is desirably those which have low rate of thermal dimensional change. In the nonwoven fabric substrate, the difference in the degree of orientation between the fibers arranged on the opposite side to the porous support and the fibers arranged on the porous support side is preferably

10° to 90° because thermal change in the width direction can be prevented.

As a material for the porous support, polysulfone, cellulose acetate, polyvinyl chloride, or a mixture thereof is preferably used, and it is particularly preferable to use polysulfone having high chemical, mechanical, and thermal stability.

Specifically, it is preferable to use polysulfone comprising the repeating unit shown in the chemical formula below because of the easiness of controlling the pore size and the high dimensional stability.

[Chemical Formula 1]

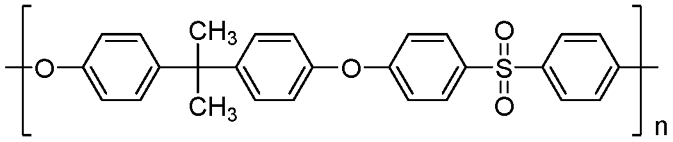

For example, a solution of the above-described polysulfone in N,N-dimethylformamide (hereinafter referred to as DMF) is cast on a substrate to a uniform thickness, and the resultant is subjected to wet coagulation in water, whereby a porous support layer having micropores with a diameter of a few tens of nm or less at most of the surface can be obtained.

The thickness of the above-described porous support layer affects the strength of the composite semipermeable membrane and the packing density in a membrane element using the same. For obtaining sufficient mechanical strength and packing density, the thickness of the porous support layer is preferably in the range of 30 to 300 $\mu$m, and more preferably in the range of 50 to 250 $\mu$m. The thickness of the porous support is preferably in the range of 10 to 200 $\mu$m, and more preferably in the range of 20 to 100 $\mu$m.

The form of the porous support layer can be observed with a scanning electron microscope, a transmission electron microscope, or an atomic force microscope. For example, in the case of observation with a scanning electron microscope, the porous support layer is peeled off from a substrate, and then this is cut by freeze fracture technique to prepare a sample for cross-sectional observation. The sample is thinly coated with platinum, platinum-palladium, or ruthenium tetrachloride, preferably with ruthenium tetrachloride, and observed with an ultra-high resolution field-emission scanning electron microscope (UHR-FE-SEM) at an accelerating voltage of 3 to 6 kV. As an ultra-high resolution field-emission scanning electron microscope, for example, S-900 type electron microscope manufactured by Hitachi Ltd. can be used. The membrane thickness and surface pore size of the porous support layer are determined from the electron micrographs obtained. The thickness and the pore size in the present invention refer to the average values. The average herein is an arithmetic average, and the thickness of the support layer is an average value of the measurements at 20 points at 20-$\mu$m intervals in the direction perpendicular to the thickness direction in the cross-sectional observation. The pore size is an average value of each projected area equivalent diameter of 200 pores counted.

Although the porous support membrane used in the present invention can be selected from various commercially available materials such as "Millipore filter VSWP" available from Millipore and "Ultrafilter UK10" available from Toyo Roshi Kaisha, Ltd., it can be produced according to the method described in Office of saline Water Research and Development Progress Report, No. 359 (1968).

In the present invention, the polyamide constituting the separating functional layer can be formed by interfacial polycondensation of polyfunctional amines with polyfunctional acid halides. Here, at least one of the polyfunctional amines and the polyfunctional acid halides preferably contain a tri- or more functional compound.

For providing sufficient separation performance and permeate flow rate, the thickness of the polyamide separation-functional layer is generally preferably in the range of 0.01 to 1 $\mu$m and more preferably in the range of 0.1 to 0.5 $\mu$m.

Polyfunctional amine herein refers to an amine having at least two primary amino groups and/or secondary amino groups in one molecule, at least one of the amino groups being a primary amino group, examples of which include aromatic polyfunctional amines such as phenylenediamine and xylylenediamine, in which two amino groups are attached to a benzene ring in any of ortho, meta, and para relationship, 1,3,5-triaminobenzene, 1,2,4-triaminobenzene, 3,5-diaminobenzoic acid, 3-aminobenzylamine, and 4-aminobenzylamine; aliphatic amines such as ethylenediamine and propylenediamine; and alicyclic polyfunctional amines such as 1,2-diaminocyclohexane, 1,4-diaminocyclohexane, 4-aminopiperidine, and 4-aminoethylpiperazine. In particular, an aromatic polyfunctional amine having 2 to 4 primary amino groups and/or secondary amino groups in one molecule is preferred in view of the selective separation properties, permeability, and heat resistance of the membrane, and m-phenylenediamine, p-phenylenediamine, and 1,3,5-triaminobenzene are suitably used as such a polyfunctional aromatic amine. Among them, it is more preferable to use m-phenylenediamine (hereinafter referred to as m-PDA) in terms of availability and handleability. These polyfunctional amines may be used alone, or two or more of them may be used simultaneously. When two or more of them are used simultaneously, the combination of the above-described amines may be used, or the combination of the above-described amine with an amine having at least two secondary amino groups in one molecule may be used. Examples of amines having at least two secondary amino groups in one molecule include, for example, piperazine and 1,3-bis(piperidyl)propane.

Polyfunctional acid halide refers to an acid halide having at least two halogenated carbonyl groups in one molecule. Examples of trifunctional acid halides include trimesic acid chloride, 1,3,5-cyclohexanetricarboxylic acid trichloride, and 1,2,4-cyclobutanetricarboxylic acid trichloride, and examples of bifunctional acid halides include aromatic bifunctional acid halides such as biphenyldicarboxylic acid dichloride, azobenzenedicarboxylic acid dichloride, terephthalic acid chloride, isophthalic acid chloride, and naphthalene dicarboxylic acid chloride; aliphatic bifunctional acid halides such as adipoyl chloride and sebacoyl chloride; and alicyclic bifunctional acid halides such as cyclopentane dicarboxylic acid dichloride, cyclohexanedicarboxylic acid dichloride, and tetrahydrofuran dicarboxylic acid dichloride. In view of reactivity with polyfunctional amines, polyfunctional acid halides are preferably polyfunctional acid chlorides. Further, in view of the selective separation properties and heat resistance of the membrane, polyfunctional acid chlorides are more preferably polyfunctional aromatic acid chlorides having 2 to 4 carbonyl chloride groups in one molecule. In particular, trimesic acid chloride is still more preferably used from the standpoint of availability and handleability. These polyfunctional acid halides may be used alone, or two or more of them may be used simultaneously.

In the composite semipermeable membrane [1] according to the present invention, the yellow index of the separating functional layer in the composite semipermeable membrane is 10 to 40. When the yellow index of the separating functional layer is not less than 10, boron removal performance can be fully exerted, and when not more than 40, a semipermeable membrane having high water permeability can be obtained.

Yellow index refers to the extent to which the hue of a polymer is away from colorless or white to the yellow direction expressed as a positive quantity, as defined in Japanese Industrial Standard JIS K 7373.

The yellow index of the separating functional layer is measured using a color meter. The measurements can be made by placing the composite semipermeable membrane on a glass plate with the separating functional layer surface down, dissolving and removing the porous support membrane with a solvent that dissolves only the porous support membrane, and performing the transmission measurement of the separating functional layer sample remaining on the glass plate. In placing the composite semipermeable membrane on the glass plate, the fabric for reinforcing the porous support membrane mentioned below is peeled off in advance. As a color meter, for example, SM color computer SM-7 manufactured by Suga Test Instruments Co., Ltd. can be used.

The polyamide separation-functional layer having a yellow index of not less than 10 is a polyamide separation-functional layer having in the polyamide separation-functional layer such a structure that an aromatic ring bears an electron-donating group and an electron-withdrawing group and/or such a structure that conjugation extends. Examples of electron-donating groups include, for example, hydroxyl groups, amino groups, and alkoxy groups. Examples of electron-withdrawing groups include, for example, carboxyl groups, sulfonic groups, aldehyde groups, acyl groups, aminocarbonyl groups, aminosulfonyl groups, cyano groups, nitro groups, and nitroso groups. Examples of such a structure that conjugation extends include, for example, polycyclic aromatic rings, polycyclic hetero rings, ethenylene groups, ethynylene groups, azo groups, imino groups, arylene groups, heteroarylene groups, and combinations of these structures. The polyamide separation-functional layer exhibits the yellow index of not less than 10 by having such a structure. However, when the amount of such a structure is increased, the yellow index becomes larger than 40. Further, when such a structure is multiply combined, the region of such a structure becomes large and turns red, resulting in a yellow index of larger than 40. If the amount of such a structure is increased and the region of such a structure is increased to the extent that the yellow index becomes larger than 40, pores on the surface and inside the polyamide separation-functional layer are clogged to thereby increase the boron removal rate, but the permeate water volume significantly decreases. When the yellow index is 10 to 40, the boron removal rate can be increased without excessively decreasing the permeate water volume.

Examples of the method of providing the polyamide separation-functional layer with the above-described structure include supporting the polyamide separation-functional layer by a compound having the above-described structure and/or chemically treating the polyamide separation-functional layer to provide the above-described structure. For retaining the above-described structure over a long period of time, chemically treating the polyamide separation-functional layer to provide the above-described structure is preferred.

The method of chemically treating the polyamide separation-functional layer includes contacting a composite semipermeable membrane in which the polyamide separation-functional layer has primary amino groups with a reagent that reacts with primary amino groups and forms a diazonium salt or derivatives thereof. The diazonium salt or derivatives thereof thus formed react with an aromatic compound to form azo groups. These azo groups extend the conjugation, and the polyamide separation-functional layer is colored yellow to orange, resulting in a yellow index of not less than 10.

The composite semipermeable membrane in which the polyamide separation-functional layer has primary amino groups is a composite semipermeable membrane retaining a compound having primary amino groups in the separating functional layer of the composite semipermeable membrane having primary amino groups as a substructure or terminal functional group of the polyamide that forms the separating functional layer. For obtain a higher boron removal rate, the compound having primary amino groups is retained in the separating functional layer.

Examples of the compound having primary amino groups include aliphatic amines, cyclic aliphatic amines,

aromatic amines, and heteroaromatic amines.

From the standpoint of the stability of the diazonium salt or derivatives thereof to be formed, aromatic amines and heteroaromatic amines are preferred.

Examples of the reagent that reacts with primary amino groups and forms a diazonium salt or derivatives thereof include aqueous solutions, for example, of nitrous acid and a salt thereof and of a nitrosyl compound. Since aqueous solutions of nitrous acid and of a nitrosyl compound readily generate gas and decompose, it is preferable to sequentially generate nitrous acid by the reaction, for example, between nitrite and an acidic solution.

The actual length of the separating functional layer per 1 μm-length of the porous support layer refers to a value determined by the method mentioned below. First, a sample is embedded in a water-soluble polymer for preparing an ultrathin section for a transmission electron microscope (TEM). The water-soluble polymer may be any polymer that maintains the shape of the sample, and, for example, PVA or the like can be used. Next, to facilitate cross-sectional observation, the sample is stained with $OsO_4$, and this is cut with an ultramicrotome to prepare an ultrathin section. A cross-section photograph of the ultrathin section obtained is taken using a TEM. The magnification may be appropriately determined depending on the membrane thickness of separating functional layers. The analysis can be performed by loading the cross-section photograph into image analysis software. The actual length of the separating functional layer surface is an actual length of the separating functional layer surface of the part corresponding to the 1 μm-length of the porous support layer, which refers to the length of the part represented by a solid line M in Figure 1.

In the composite semipermeable membrane [1] according to the present invention, the actual length of the polyamide separation-functional layer per 1 μm-length of the porous support layer is from 2 μm to 5 μm. When the actual length is less than 2 μm, permeate flux cannot be ensured because the membrane surface area is small, and if the permeate flux is significantly improved by aftertreatment, the removal rate decreases. When the actual length is more than 5 μm, the pleated structure collapses upon operation, and the permeate flux decreases.

For obtaining the composite semipermeable membrane of the constitution [2] according to the present invention, the temperature during the interfacial polycondensation step (A) is necessarily in the range of 40°C to 70°C and preferably in the range of 40°C to 60°C. When the temperature during interfacial polycondensation is less than 40°C, there is a problem in that pleats will not be large, thereby decreasing permeate flux, whereas when the temperature is above 70°C, there is a problem in that the removal rate decreases.

For the temperature means during interfacial polycondensation, the porous support layer in contact with an aqueous polyfunctional amine solution may be heated, or a heated organic solvent solution of polyfunctional acid halides may be brought in contact. The temperature during interfacial polycondensation can be determined, for example, from the measurement by a non-contact thermometer such as a radiation thermometer and the measurement by contacting a thermocouple thermometer with a membrane surface.

For obtaining the composite semipermeable membrane of the constitution [2] according to the present invention, a heat treatment step (B) is carried out following the above-described interfacial polycondensation step (A) in order to further promote cross-linked polyamide formation. The temperature during the heat treatment is necessarily in the range of 70 to 150°C and preferably in the range of 80 to 120°C. When the temperature during the heat treatment is less than 70°C, there are problems in that it requires a long time to sufficiently promote the cross-linked polyamide formation on the support layer and that the cross-linked polyamide formation cannot be sufficiently promoted even if the heating is performed for a long time, whereas when the temperature during the heat treatment is more than 150°C, there is a problem in that the composite semipermeable membrane is dried and the permeate flow rate decreases.

For the heating means during the heat treatment, the composite semipermeable membrane after interfacial polycondensation may be allowed to stand in a heated oven, may be heated by blowing warm air, or may be contacted again with a heated organic solvent solution of polyfunctional acid halides.

The time for which the heat treatment is carried out is preferably from 5 seconds to 3 minutes and more preferably from 10 seconds to 1 minute. When the time for which the interfacial polycondensation is carried out is from 5 seconds to 3 minutes, the cross-linked polyamide formation on the porous support layer can be sufficiently promoted, and the porous support layer can be kept wet to maintain the performance of the composite semipermeable membrane at a high level.

For the composite semipermeable membrane [2] obtained by the above-mentioned method, the solute rejection performance and water permeability can be even more improved by adding, for example, the step of treating with hot water at a temperature preferably in the range of 40 to 100°C and more preferably in the range of 60 to 100°C preferably for 1 to 10 minutes and more preferably for 2 to 8 minutes.

The composite semipermeable membrane obtained can be used as it is and can also be modified to have different performance by carrying out any chemical aftertreatment or coating. For example, it is preferable to carry out the steps of contacting the polyamide separation-functional layer of the composite semipermeable membrane [2] with a compound having primary amino groups, then contacting with a reagent that reacts with the primary amino groups and forms a diazonium salt or derivatives thereof, and further contacting with a reagent that reacts with the diazonium salt or derivatives thereof, in the order mentioned.

A method of producing the composite semipermeable membrane will now be described, said method not falling under the scope of the present invention.

The production method for obtaining the composite semipermeable membrane [1] has either of the constitution [3] or [4] below:

[3] A method of producing a composite semipermeable membrane, comprising the steps of: contacting an aqueous polyfunctional amine solution with a polyfunctional acid halide-containing solution to form a polyamide separation-functional layer on a porous support layer, followed by contacting the polyamide separation-functional layer with a compound having primary amino groups; contacting with a reagent that reacts with the primary amino groups and forms a diazonium salt or derivatives thereof; and contacting with a reagent that reacts with the diazonium salt or derivatives thereof, wherein the temperature of the membrane surface immediately after contacting the aqueous polyfunctional amine solution with the polyfunctional acid halide-containing solution is in the range of 25 to 60°C, and the concentration of the compound having primary amino groups in a complex of the polyamide separation-functional layer and the porous support layer after contacting the polyamide separation-functional layer with the compound having primary amino groups is in the range of $30 \times 10^{-6}$ to $160 \times 10^{-6}$ mol/g, or

[4] A method of producing a composite semipermeable membrane, comprising the steps of: contacting an aqueous polyfunctional amine solution with a polyfunctional acid halide-containing solution to form a polyamide separation-functional layer on a porous support layer, followed by contacting the polyamide separation-functional layer with a compound having primary amino groups; contacting with a reagent that reacts with the primary amino groups and forms a diazonium salt or derivatives thereof; and contacting with a reagent that reacts with the diazonium salt or derivatives thereof, wherein the aqueous polyfunctional amine solution and/or polyfunctional acid halide-containing solution contain an acylation catalyst, and the concentration of the compound having primary amino groups in a complex of the polyamide separation-functional layer and the porous support layer after contacting the polyamide separation-functional layer with the compound having primary amino groups is in the range of $30 \times 10^{-6}$ to $160 \times 10^{-6}$ mol/g. Each production process will now be described in detail.

The separating functional layer in the composite semipermeable membrane [1], as in the case of the composite semipermeable membrane [5], is able to form its skeleton, for example, by carrying out interfacial polycondensation on the surface of a porous support layer using an aqueous solution that contains the above-mentioned polyfunctional amine and an organic solvent solution that contains polyfunctional acid halides and is immiscible with water.

The concentration of polyfunctional amines in the aqueous polyfunctional amine solution is preferably in the range of 0.1 to 20% by weight and more preferably in the range of 0.5 to 15% by weight. Within this range, sufficient salt removal performance and water permeability can be obtained. The aqueous polyfunctional amine solution may contain, for example, surfactants, organic solvents, alkaline compounds, and antioxidants as long as the reaction of polyfunctional amines with polyfunctional acid halides is not impeded. Surfactants have an effect of improving the wettability on the porous support layer surface and reducing the interfacial tension between the aqueous amine solution and a nonpolar solvent. Organic solvents can serve as a catalyst for an interfacial polycondensation reaction, and, in some cases, the interfacial polycondensation reaction can be carried out efficiently by adding them.

To carry out interfacial polycondensation on the porous support layer, the above-mentioned aqueous polyfunctional amine solution is first contacted with the porous support layer. The contact is preferably carried out uniformly and continuously on the surface of the porous support membrane. Specifically, examples of the method include coating the porous support layer with the aqueous polyfunctional amine solution and immersing the porous support layer in the aqueous polyfunctional amine solution. The contact time between the porous support layer and the aqueous polyfunctional amine solution is preferably in the range of 1 to 10 minutes, and more preferably in the range of 1 to 3 minutes.

After the aqueous polyfunctional amine solution has been contacted with the porous support membrane, the solution is sufficiently drained so that droplets would not remain on the membrane. Sufficient draining prevents degradation in membrane performance due to the membrane defects resulting from the part where the droplets remained after membrane formation. Examples of the method of draining the solution that can be used include, for example, holding vertically the porous support membrane after being contacted with the aqueous polyfunctional amine solution to subject the excess aqueous solution to gravity flow and blowing airflow such as nitrogen from an air nozzle to compulsorily drain the solution, as described in JP 02-78428 A. After the draining, the membrane surface can also be dried to remove a portion of the water of the aqueous solution.

Next, the porous support layer after being contacted with the aqueous polyfunctional amine solution is contacted with an organic solvent solution containing polyfunctional acid halides to form the skeleton of a cross-linked polyamide separation-functional layer by interfacial polycondensation.

The concentration of polyfunctional acid halides in the organic solvent solution is preferably in the range of 0.01 to 10% by weight and more preferably in the range of 0.02 to 2.0% by weight. The concentration not less than 0.01% by weight ensures sufficient reaction rate, and the concentration not more than 10% by weight prevents the occurrence

of side reactions. It is preferable to add an acylation catalyst such as DMF to this organic solvent solution because the interfacial polycondensation will be accelerated.

The organic solvent is desirably one which is immiscible with water, dissolves polyfunctional acid halides, and does not break the porous support membrane, and may be any solvent as long as it is inactive against polyfunctional amine compounds and polyfunctional acid halides. Preferred examples include hydrocarbon compounds such as n-hexane, n-octane, and n-decane.

The method of contacting the organic solvent solution of polyfunctional acid halides with the aqueous polyfunctional amine compound phase may be carried out in the same manner as the method of coating the porous support layer with an aqueous polyfunctional amine solution and the method of immersing the porous support layer in an aqueous polyfunctional amine solution described above.

In the composite semipermeable membrane [1], the method for increasing the actual length of the separating functional layer is either of the following, i.e., (i) raising the temperature of the membrane surface immediately after contacting the aqueous polyfunctional amine solution with the polyfunctional acid halide-containing solution to higher than room temperature or (ii) making an acylation catalyst coexist during interfacial polymerization.

In the method (i), the temperature of the membrane surface immediately after contacting the aqueous polyfunctional amine solution with the polyfunctional acid halide-containing solution is in the range of 25 to 60°C. The temperature of the membrane surface is preferably in the range of 30 to 50°C. When the temperature is 25°C or lower, pleats will not be large, leading to the decrease of permeate flux, whereas when the temperature is higher than 60°C, the removal rate tends to decrease. When the temperature of the membrane surface immediately after contacting the aqueous polyfunctional amine solution with the polyfunctional acid halide-containing solution is in the range of 25 to 60°C, the actual length of the separating functional layer per 1 μm-length of the porous support layer can be from 2 μm to 5 μm, and a high permeate flux and boron removal rate can be obtained.

For controlling the temperature within the above-described range, the porous support layer may be heated, or a heated organic solvent solution of polyfunctional acid halides may be brought in contact. The temperature of the membrane surface immediately after contacting the aqueous polyfunctional amine solution with the polyfunctional acid halide-containing solution can be measured with a non-contact thermometer such as a radiation thermometer.

In the method (ii), the acylation catalyst is preferably dissolved in an aqueous polyfunctional amine solution or an organic solvent of polyfunctional acid halides and may be added to either or both the aqueous polyfunctional amine solution and the organic solvent of polyfunctional acid halides.

Examples of the acylation catalyst include compounds containing amide groups. Examples of compounds containing amide groups include linear amide compounds and cyclic amide compounds. Examples of linear amide compounds include, for example, N-methylformamide, N,N-dimethylformamide, N,N,-dimethylacetamide, N,N-diethylformamide, and N,N-diethylacetamide. Examples of cyclic amide compounds include, for example, N-methylpyrrolidinone, γ-butyrolactam, and ε-caprolactam.

When an acylation catalyst is added to an aqueous polyfunctional amine solution, the amount is preferably in the range of 0.1 to 10% by weight and more preferably in the range of 0.1 to 5% by weight in view of the balance of membrane performance. When an acylation catalyst is added into an organic solvent containing polyfunctional acid halides, the amount is preferably in the range of 10 to 1,000 ppm and more preferably in the range of 10 to 500 ppm in view of the balance of membrane performance. When the concentration of the acylation catalyst is in the above-described range, the effect of increasing the actual length of the separating functional layer can be obtained, and excellent salt and boron removal performance is provided. Depending on the type and concentration of acylation catalyst, reaction of polyfunctional amines with polyfunctional acid halides can be controlled, and the actual length of the separating functional layer can be controlled.

In producing the composite semipermeable membrane of the constitution [1] and [2] according to the present invention, as described above, after carrying out interfacial polycondensation by means of contact with the organic solvent solution of polyfunctional acid halides to form a separating functional layer comprising cross-linked polyamide on the porous support membrane, it is preferable to drain and remove the excess solvents. Examples of the method of draining the solvents that can be used include holding the membrane vertically to remove the excess organic solvent by gravity flow. In this case, the vertical holding time is preferably between 1 and 5 minutes and more preferably between 1 and 3 minutes. When the holding time is in this preferred range, a separating functional layer is completely formed, and at the same time performance degradation will not occur because defects due to the excessive drying of the organic solvent will not occur.

For the composite semipermeable membrane having a polyamide separation-functional layer obtained by the above-mentioned method, the solute rejection performance and water permeability can be even more improved by adding, for example, the step of treating with hot water at a temperature preferably in the range of 40 to 100°C and more preferably in the range of 60 to 100°C preferably for 1 to 10 minutes and more preferably for 2 to 8 minutes.

Next, to produce the composite semipermeable membrane [1], the above-obtained composite semipermeable membrane having a polyamide separation-functional layer is contacted with a compound having primary amino groups.

The primary amino groups react with a reagent that forms a diazonium salt or derivatives thereof and further reacts with an aromatic compound to form azo groups, whereby the boron removal rate can be expected to improve.

The concentration and time for the contact can be appropriately adjusted in order to obtain the effect of interest.

Examples of the compound having primary amino groups include aliphatic amines, cyclic aliphatic amines, aromatic amines, and heteroaromatic amines.
From the standpoint of the stability of the diazonium salt or derivatives thereof to be formed, aromatic amines and heteroaromatic amines are preferred. For having a yellow index of 10 to 40, the molecular weight of the carbon skeleton, parts excluding functional groups, of the compound having primary amino groups is preferably not more than 500. The method of contacting the separating functional layer with the compound having primary amino groups is not particularly limited; a solution of the compound having primary amino groups may be applied, and the above-described composite semipermeable membrane may be immersed in a solution of the compound having primary amino groups. They are preferably carried out uniformly and continuously.

As a solvent that dissolves a compound having primary amines, any solvent may be used as long as the compound is dissolved and the composite semipermeable membrane is not eroded. In addition, the solution may contain, for example, surfactants, acidic compounds, alkaline compounds, and antioxidants as long as the reaction between primary amino groups and the reagent that forms a diazonium salt or derivatives thereof is not impeded.

The concentration of a compound having primary amino groups in the complex of a polyamide separation-functional layer and a porous support layer is a value determined by the method mentioned below. After contacting a polyamide separation-functional layer with a compound having primary amino groups, droplets are removed. A composite semipermeable membrane is cut out, and a substrate is peeled off to obtain a complex of the polyamide separation-functional layer and the porous support layer. This is immersed in a solvent that dissolves the compound having primary amino groups and does not dissolve the polyamide separation-functional layer and the porous support layer, and the compound having primary amino groups is extracted into a solvent. The components extracted are measured, for example, with an Ultraviolet-Visible spectrophotometer after obtaining a calibration curve or by high-performance liquid chromatography or gas chromatography to calculate the compound weight in the complex of the polyamide separation-functional layer and the porous support layer. Then, the complex of the polyamide separation-functional layer and the porous support layer is taken out from the solvent, dried by heating, cooled to room temperature in a desiccator, and then weighed to determine the concentration of the compound having primary amino groups in the complex of the polyamide separation-functional layer and the porous support layer from the equation below.

$$\text{Compound concentration (mol/g)} = 100 \times (\text{compound weight} / \text{molecular weight of compound}) / \text{dried membrane weight}$$

In the composite semipermeable membrane [1] according to the present invention, for achieving a yellow index of 10 to 40, the concentration of a compound having primary amino groups in the complex of the polyamide separation-functional layer and the porous support layer after contacting the polyamide separation-functional layer with the compound having primary amino groups needs to be in the range of $30 \times 10^{-6}$ to $160 \times 10^{-6}$ mol/g. When the concentration of the compound having primary amino groups is less than $30 \times 10^{-6}$ mol/g, the removal rate-improving effect due to azo group formation is small, and when above $160 \times 10^{-6}$ mol/g, there is a problem in that the permeate flow rate decreases because of increased azo group formation.

To produce the composite semipermeable membrane [1] according to the present invention, the composite semipermeable membrane having primary amino groups in the separating functional layer described above is then contacted with a reagent that reacts with primary amino groups and forms a diazonium salt or derivatives thereof. Examples of the reagent that reacts with primary amino groups and forms a diazonium salt or derivatives thereof to be contacted include aqueous solutions, for example, of nitrous acid and a salt thereof and of a nitrosyl compound. Since aqueous solutions of nitrous acid and of a nitrosyl compound readily generate gas and decompose, it is preferable to sequentially generate nitrous acid by the reaction, for example, between nitrite and an acidic solution. In general, nitrite generates nitrous acid ($HNO_2$) by reacting with hydrogen ions, and the generation is efficient when the pH of an aqueous solution is 7 or lower, preferably 5 or lower, and more preferably 4 or lower. Above all, an aqueous solution of sodium nitrite obtained by the reaction with hydrochloric acid or sulfuric acid in an aqueous solution is particularly preferred in terms of convenience in handling.

The concentration of nitrous acid or nitrite in the above-described reagent that reacts with primary amino groups and forms a diazonium salt or derivatives thereof is preferably in the range of 0.01 to 1% by weight. Within this range, the effect of forming sufficient diazonium salts or derivatives thereof is obtained, and it is easy to handle the solution.

The temperature of the nitrous acid solution is preferably 15°C to 45°C. Within this range, the reaction will not take too much time, and it is easy to handle the solution because the decomposition of nitrous acid is not too fast.

The contact time with the nitrous acid solution is preferably the time during which a diazonium salt and/or derivatives thereof are formed; the treatment can be carried out in a short time at a high concentration, but it requires a long time at a low concentration. Therefore, in the case of a solution of the above-described concentration, the contact time is preferably within 10 minutes and more preferably within 3 minutes. The contacting method is not particularly limited; a solution of the reagent may be applied (coating), or the composite semipermeable membrane may be immersed in a solution of the reagent. As a solvent that dissolves the reagent, any solvent may be used as long as the reagent is dissolved and the composite semipermeable membrane is not eroded. In addition, the solution may contain, for example, surfactants, acidic compounds, and alkaline compounds as long as the reaction between primary amino groups and the reagent is not impeded.

A portion of the diazonium salt or derivatives thereof formed by the contact is converted into a phenolic hydroxyl group by reacting with water. Further, it also reacts with aromatic rings having a structure by which a porous support layer and a separating functional layer are formed or with aromatic rings of the compound having primary amino groups, the compound being retained in the separating functional layer, to form azo groups. Whereby the boron removal rate can be expected to improve.

Next, the composite semipermeable membrane in which a diazonium salt or derivatives thereof have been formed is contacted with a reagent that reacts with the diazonium salt or derivatives thereof. Examples of the reagent that reacts with the diazonium salt or derivatives thereof include, for example, chloride ion, bromide ion, cyanide ion, iodide ion, fluoroboric acid, hypophosphorous acid, sodium bisulfite, sulfite ion, aromatic amines, phenols, hydrogen sulfide, and thiocyanic acid. Upon reacting with sodium bisulfite and sulfite ion, substitution reaction immediately occurs, and amino groups are substituted with sulfo groups. The contact with aromatic amines or phenols causes a diazo coupling reaction, which allows introduction of aromatics onto membrane surface. These reagents may be used alone or may be used in combination, or the composite semipermeable membrane may be contacted with different reagents more than once. The reagent to be contacted is preferably sodium bisulfite and sulfite ion.

The concentration and time for the contact with a reagent that reacts with the diazonium salt or derivatives thereof can be appropriately adjusted in order to obtain the effect of interest.

The temperature for contacting with a reagent that reacts with the diazonium salt or derivatives thereof is preferably 10 to 90°C. Within this temperature range, the reaction readily proceeds, while the decrease of permeate flow rate due to polymer shrinkage will not occur.

The composite semipermeable membrane [1] and [2] according to the present invention thus produced is wound, together with a feed spacer such as a plastic net, a permeate spacer such as a tricot, and, if necessary, a film or a nonwoven fabric for enhancing pressure resistance, around a cylindrical water-collecting pipe provided with a large number of pores by drilling and suitably used as a spiral composite semipermeable membrane element. Further, the elements can be connected in series or in parallel and housed in a pressure container to provide a composite semipermeable membrane module.

Further, the above-described composite semipermeable membrane, and elements and modules thereof can be combined, for example, with a pump for feeding feed water thereto and with an apparatus for pretreating the feed water to constitute a fluid separation apparatus. By using this separation apparatus, feed water can be separated into permeate water such as drinking water and concentrated water that has not permeated through the membrane to obtain water for the intended purpose.

Considering the fact that the higher the operating pressure of the fluid separation apparatus, the more the energy required for operation increases although the more salt removal rate improves, and the durability of the composite semipermeable membrane, the operating pressure during passing the water to be treated through the composite semipermeable membrane is preferably 1.0 MPa to 10 MPa. The temperature of feed water is preferably 5°C to 45°C, because the higher it is, the more the salt removal rate decreases, but the lower it is, the more the membrane permeate flux decreases as well. When the pH of feed water is high, in the case of feed water of high salt concentration such as sea water, scale of magnesium and the like can occur, and there is a concern about membrane degradation due to the high pH operation. Thus, the operation in the neutral range is preferred.

Examples of the raw water treated with the composite semipermeable membrane according to the present invention include sea water, brackish water, and liquid mixtures containing TDS (Total Dissolved Solids) of 500 mg/L to 100 g/L, such as wastewater. In general, TDS refers to total dissolved solid content and is expressed as "mass/volume" or "weight ratio". By definition, it can be calculated from the weight of the residue on evaporation at a temperature of 39.5 to 40.5°C of the solution filtered through a 0.45-micron filter, and more conveniently it is converted from practical salinity (S).

## Examples

The present invention will now be described in more detail by way of examples, but the present invention is not limited by these examples.

The yellow index and actual length of the separating functional layers in Comparative Examples and Examples were measured as described below. (Temperature of membrane surface immediately after contacting aqueous polyfunctional amine solution with polyfunctional acid halide solution)

The membrane surface temperature immediately after applying a polyfunctional acid halide solution to the porous support layer contacted with an aqueous polyfunctional amine solution was measured with a radiation thermometer (TA-0510F manufactured by MINOLTA). The emissivity $\varepsilon$ was 0.95. (Concentration of compound having primary amino groups in a complex of polyamide separation-functional layer and porous support layer)

After contacting a polyamide separation-functional layer with a compound having primary amino groups, droplets were removed. A composite semipermeable membrane was cut into 10 $\times$ 10 cm, and a substrate was peeled off to obtain a complex of the polyamide separation-functional layer and the porous support layer. This is immersed in 50 g of ethanol for 8 hours, and the components extracted with ethanol was measured with an Ultraviolet-Visible spectrophotometer (UV-2450 manufactured by Shimadzu Corporation) after obtaining a calibration curve to calculate the compound weight in the complex of the polyamide separation-functional layer and the porous support layer. Then, the complex of the polyamide separation-functional layer and the porous support layer was taken out from the ethanol, dried by heating at 120°C for 2 hours, cooled to room temperature in a desiccator, and then weighed to determine the concentration of the compound having primary amino groups in the complex of the polyamide separation-functional layer and the porous support layer by the equation below.

$$\text{Compound concentration (mol/g)} = 100 \times (\text{compound weight / molecular weight of compound}) / \text{dried membrane weight}$$

(Yellow index)

After drying a composite semipermeable membrane at room temperature for 8 hours, the substrate was peeled off, and the resultant was placed on a glass plate with the separating functional layer surface down, after which the porous support layer was dissolved with dichloromethane and removed, and the separating functional layer remaining on the glass plate was measured with SM color computer SM-7 manufactured by Suga Test Instruments Co., Ltd. (Actual length of polyamide separation-functional layer per 1 $\mu$m-length of porous support layer)

A composite semipermeable membrane is embedded in PVA, stained with $OsO_4$, and this is cut with an ultramicrotome to prepare an ultrathin section. A cross-section photograph of the ultrathin section obtained is taken using a TEM. The cross-section photograph taken with a TEM was imported into image analysis software Image Pro to carry out the analysis, and the actual length of the separating functional layer per 1 $\mu$m-length of the porous support layer was determined.

The various properties of the composite semipermeable membranes in Comparative Examples and Examples were determined by carrying out membrane filtration treatment for 24 hours by feeding the sea water adjusted to a temperature of 25°C and a pH of 6.5 (TDS concentration; about 3.5%) to the composite semipermeable membrane at an operating pressure of 5.5 MPa and measuring the water quality of the permeate water and feed water after that.

(Desalination rate (TDS removal rate))

The desalination rate, i.e., TDS removal rate was determined by the equation below.

$$\text{TDS removal rate (\%)} = 100 \times \{1 - (\text{TDS concentration in permeate water / TDS concentration in feed water})\}$$

(Membrane permeate flux)

For the membrane permeate flow rate of feed water (sea water), the permeate water volume per square meter of the membrane surface per day (cubic meter) is used to express membrane permeate flux ($m^3/m^2$/day).

(Boron removal rate)

The boron concentration in feed water and in permeate water was analyzed by an ICP emission spectrometer (P-4010 manufactured by Hitachi Ltd.) to make a determination from the following equation.

$$\text{Boron removal rate (\%)} = 100 \times \{1 - (\text{boron concentration in permeate water} / \text{boron concentration in feed water})\}$$

(Degree of fiber orientation of substrate)

Ten small pieces of sample were randomly collected from a nonwoven fabric, and photographs at a magnification of 100-fold to 1,000-fold were taken with a scanning electron microscope. For 10 fibers from each sample, 100 fibers in total, the angle was measured taking the longitudinal direction (lengthwise direction) of the nonwoven fabric as 0° and the width direction (transverse direction) of the nonwoven fabric as 90°, and the average value thereof was rounded to one decimal place to determine the degree of fiber orientation.

(Rate of thermal dimensional change of substrate)

A substrate is cut parallel to the film-forming direction into three 25 cm long and 25 cm wide samples. For each sample, marks indicating the length of 20 cm parallel to the film-forming direction were placed at three locations, and marks indicating the length of 20 cm perpendicular to the film-forming direction were placed at three locations. The sample is immersed in hot water at 100° for 10 minutes, and then taken out for natural drying. For three samples, the lengths of the three marked locations are measured to 0.01 cm to make a determination by the following equation. The longitudinal (nine locations) and transverse (nine locations) of the three samples were each averaged for calculation. When the length of the line after immersion is shorter than the length of the line before immersion, i.e., when shrinkage has occurred, the values are expressed as positive, and when the length of the line after immersion is longer than the length of the line before immersion, the values are expressed as negative.

$$\text{Rate of thermal dimensional change} = ((\text{length of line before immersion}) - (\text{length of line after immersion})) / (\text{length of line before immersion}) \times 100$$

(Reference Example 1)

Using a polyester staple fiber nonwoven fabric (air permeability: 0.5 to 1 cc/$cm^2$/sec, degree of fiber orientation: front 28°, back 28°) as a substrate, a solution of 15.7% by weight of polysulfone in DMF was cast on the front of the nonwoven fabric at a thickness of 200 $\mu$m at room temperature (25°C), and the resultant was immediately immersed in pure water for 5 minutes or more to continuously prepare porous support layers (thickness: 210 to 215 $\mu$m).

(Reference Examples 2 and 3)

A porous support layer was prepared in the same manner as in Reference Example 1 except using as a substrate the filament nonwoven fabric shown in Table 1.

[Table 1]

| | Degree of fiber orientation (°) | |
|---|---|---|
| | Front | Back |
| Reference Example 1 | 28 | 28 |
| Reference Example 2 | 40 | 28 |
| Reference Example 3 | 50 | 20 |

(Reference Example 4)

The porous support layer obtained in Reference Example 1 was immersed in a 4.5% by weight aqueous solution of m-PDA for 2 minutes, and the support layer was slowly pulled up in the vertical direction. Nitrogen was blown thereto from an air nozzle to remove the excess aqueous solution from the support layer surface. Thereafter, an n-decane

solution at 25°C containing 0.175% by weight of trimesic acid chloride was applied thereto such that the whole surface was wet, and the support membrane was left to stand for 1 minute. Then, to remove the excess solution from the membrane, the membrane was held upright for 1 minute for draining. Thereafter, the membrane was washed with hot water at 90°C for 2 minutes to obtain a composite semipermeable membrane. The temperature of the membrane surface immediately after applying the solution of trimesic acid chloride in decane was 23°C.

(Reference Examples 5 to 9)

A composite semipermeable membrane was prepared in the same manner as in Reference Example 4 except changing the porous support layer used and changing the temperature of the solution of trimesic acid chloride in decane applied to the temperatures described in Table 2. The values of the temperature of the membrane surface immediately after applying the solution of trimesic acid chloride in decane are as shown in Table 2.

[Table 2]

| | Porous support layer | m-PDA concentration (wt%) | TMC concentration (wt%) | TMC temperature (°C) | Membrane surface temperature (°C) |
|---|---|---|---|---|---|
| Reference Example 4 | Reference Example 1 | 4.5 | 0.175 | 25 | 23 |
| Reference Example 5 | Reference Example 1 | 4.5 | 0.175 | 40 | 34 |
| Reference Example 6 | Reference Example 1 | 4.5 | 0.175 | 60 | 55 |
| Reference Example 7 | Reference Example 1 | 4.5 | 0.175 | 70 | 65 |
| Reference Example 8 | Reference Example 2 | 4,5 | 0.175 | 40 | 34 |
| Reference Example 9 | Reference Example 3 | 4.5 | 0.175 | 60 | 55 |

(Refference Example 10)

the porous support layer obtained in Reference Exemple 1 was immersed in an aqueous solution of 5.0% by weight of m-PDA and 0.5% by weight of DMF for 2 minutes, and the support layer was slowly pulled up in the vertical direction. Nitrogen was blown thereto from an air nozzle to remove the excess aqueous solution from the support layer surface. Thereafter, an n-decane solution containing 0.175% by weight of trimesic acid chloride was applied thereto such that the whole surface was wet, and the support membrane was left to stand for 1 minute. Then, to remove the excess solution from the membrane, the membrane was held upright for 1 minute for draining. Thereafter, the membrane was washed with hot water at 90°C for 2 minutes to obtain a composite semipermeable membrane.

(Reference Examples 11 to 15)

A composite semipermeable membrane was prepared in the same manner as in Reference Example 6 except that acylation catalysts were added in the amount described in Table 3.

[Table 3]

| | Polyfunctional amine solution | | Polyfunctional halide solution | |
|---|---|---|---|---|
| | m-PDA concentration (wt%) | Additive | TMC concentration (wt%) | Additive |
| Reference Example 10 | 5.0 | DMF (1.0wt%) | 0.175 | absence |
| Reference Example 11 | 5.0 | NMP (0.5wt%) | 0.175 | absence |
| Reference Example 12 | 5.0 | DMF (15wt%) | 0.175 | absence |

(continued)

| | Polyfunctional amine solution | | Polyfunctional halide solution | |
|---|---|---|---|---|
| | m-PDA concentration (wt%) | Additive | TMC concentration (wt%) | Additive |
| Reference Example 13 | 5.0 | absence | 0.175 | NMP (200ppm) |
| Reference Example 14 | 5.0 | DMF (0.3wt%) | 0.175 | DMF(10ppm) |
| Reference Example 15 | 5.0 | absence | 0.175 | NMP (3,000ppm) |

(Example 1)

The composite semipermeable membrane obtained in Reference Example 5 was immersed in an aqueous solution of 500 ppm of m-PDA for 60 minutes and treated at room temperature (35°C) for 1 minute with an aqueous solution of 0.3% by weight of sodium nitrite whose pH was adjusted to 3 with sulfuric acid. After removing the composite semipermeable membrane from the aqueous nitrous acid solution, the membrane was washed with water and immersed in an aqueous solution of 0.1% by weight of sodium sulfite for 2 minutes. The evaluation of the composite semipermeable membrane thus obtained showed that each value of the membrane permeate flux, TDS removal rate, and boron removal rate was as shown in Table 4. The values of the yellow index and actual length of the separating functional layer of the composite semipermeable membrane are as shown in Table 4. Further, the values of the m-PDA concentration in the complex of the polyamide separation-functional layer and the porous support layer after immersion in the m-PDA solution are as shown in Table 5. The molecular weight of the carbon skeleton, parts excluding functional groups, of the m-PDA is 76.

(Examples 2 to 11, Comparative Examples 1 to 6)

The treatment was carried out in the same manner as in Example 1 except changing the composite semipermeable membrane treated, m-PDA concentration, immersion time, and sodium nitrite concentration to the conditions described in Table 5. The evaluation of the composite semipermeable membrane of each Example and Comparative Example showed that each value of the membrane permeate flux, TDS removal rate, and boron removal rate was as shown in Table 4. The yellow index and actual length of the separating functional layer of the composite semipermeable membrane of each Example and Comparative Example are described in Table 4. Further, the m-PDA concentration in the complex of the polyamide separation-functional layer and the porous support layer after immersion in the m-PDA solution of each Example and Comparative Example is described in Table 5.

[Table 4]

| | Yellow index | Actual length (μm) | TDS removal rate (%) | Membrane permeable flux ($m^3/m^2/day$) | Boron removal rate (%) |
|---|---|---|---|---|---|
| Example 1 | 25 | 3.1 | 99.8 | 1.04 | 93.4 |
| Example 2 | 23 | 3.1 | 99.8 | 0.90 | 95.1 |
| Example 3 | 35 | 3.1 | 99.8 | 1.23 | 91.6 |
| Example 4 | 14 | 3.1 | 99.8 | 1.15 | 90.9 |
| Example 5 | 32 | 4.7 | 99.7 | 1.32 | 89.6 |
| Example 6 | 31 | 4.3 | 99.6 | 1.02 | 92.4 |
| Example 7 | 23 | 2.9 | 99.7 | 0.91 | 93.5 |
| Example 8 | 36 | 3.2 | 99.7 | 1.18 | 90.5 |
| Example 9 | 23 | 2.5 | 99.7 | 1.09 | 91.3 |
| Example 10 | 24 | 3.1 | 99.8 | 1.21 | 91.8 |
| Example 11 | 30 | 4.7 | 99.7 | 1.27 | 90.9 |
| Comparative Example 1 | 24 | 1.5 | 99.8 | 0.67 | 93.7 |

(continued)

| | Yellow index | Actual length (μm) | TDS removal rate (%) | Membrane permeable flux ($m^3/m^2$/day) | Boron removal rate (%) |
|---|---|---|---|---|---|
| Comparative Example 2 | 7 | 3.1 | 99.7 | 0.99 | 89.2 |
| Comparative Example 3 | 42 | 3.1 | 99.8 | 0.44 | 94.8 |
| Comparative Example 4 | 27 | 5.4 | 99.3 | 1.35 | 83.5 |
| Comparative Example 5 | 26 | 5.9 | 93.5 | 1.15 | 83.9 |
| Comparative Example 6 | 26 | 5.3 | 92.6 | 0.99 | 86.3 |

[Table 5]

| | Composite semipermeable membrane | m-PDA solution immersion | | m-PDA concentration in a complex of the polyamide separation-functional layer and the porous support layer after m-PDA solution immersion ($\times 10^{-6}$ mol/g) | Sodium nitrite concentration (wt%) |
|---|---|---|---|---|---|
| | | m-PDA concentration (ppm) | immersion time (min) | | |
| Example 1 | Reference Example 5 | 500 | 60 | 79 | 0.3 |
| Example 2 | Reference Example 5 | 500 | 60 | 79 | 0.25 |
| Example 3 | Reference Example 5 | 800 | 60 | 93 | 0.5 |
| Example 4 | Reference Example 5 | 300 | 60 | 53 | 0.3 |
| Example 5 | Reference Example 6 | 800 | 60 | 100 | 0.3 |
| Example 6 | Reference Example 10 | 800 | 60 | 95 | 0.3 |
| Example 7 | Reference Example 11 | 500 | 60 | 77 | 0.3 |
| Example 8 | Reference Example 13 | 500 | 60 | 80 | 0.5 |
| Example 9 | Reference Example 14 | 500 | 60 | 73 | 0.4 |
| Example 10 | Reference Example 8 | 500 | 60 | 78 | 0.35 |
| Example 11 | Reference Example 9 | 800 | 60 | 99 | 0.25 |
| Comparative Example 1 | Reference Example 2 | 500 | 60 | 71 | 0.2 |
| Comparative Example 2 | Reference Example 3 | 0 | 0 | 26 | 0.25 |

(continued)

| | Composite semipermeable membrane | m-PDA solution immersion | | m-PDA concentration in a complex of the polyamide separation-functional layer and the porous support layer after m-PDA solution immersion ($\times 10^{-6}$ mol/g) | Sodium nitrite concentration (wt%) |
|---|---|---|---|---|---|
| | | m-PDA concentration (ppm) | immersion time (min) | | |
| Comparative Example 3 | Reference Example 3 | 1500 | 180 | 180 | 0.15 |
| Comparative Example 4 | Reference Example 5 | 800 | 60 | 110 | 0.25 |
| Comparative Example 5 | Reference Example 8 | 500 | 60 | 88 | 0.25 |
| Comparative Example 6 | Reference Example 11 | 800 | 60 | 112 | 0.25 |

The values of the degree of fiber orientation and rate of thermal dimensional change of the substrate used in Example 10, Example 11, and Comparative Example 1 are as shown in Table 6. When the fibers of the filament nonwoven fabric arranged on the opposite side to the porous support were more longitudinally oriented in the film-forming direction than the fibers arranged on the porous support side, the rate of thermal dimensional change was small, and the dimension stability was high.

[Table 6]

| | Degree of fiber orientation (°) | | Rate of thermal dimensional change (%) | |
|---|---|---|---|---|
| | Front | Back | Longitudinal | Transverse |
| Example 10 | 40 | 28 | 0.4 | 0 |
| Example 11 | 50 | 20 | 0.5 | 0 |
| Comparative Example 1 | 28 | 28 | 0.8 | -0.4 |

As described above, the composite semipermeable membrane obtained by the constitution [1] of the present invention has high boron removal performance and high water permeation performance.

(Examples 12 to 17 and Comparative Examples 7 to 13)

The porous support layer obtained in Reference Example 1 was immersed in a 3.8% by weight aqueous solution of m-PDA for 2 minutes, and the support layer was slowly pulled up in the vertical direction. Nitrogen was blown thereto from an air nozzle to remove the excess aqueous solution from the porous support layer surface. Thereafter, an n-decane solution at the interfacial polycondensation temperature described in Table 1 containing 0.165% by weight of trimesic acid chloride was applied thereto such that the whole surface was wet, and the support membrane was left to stand for 10 seconds. Then, the membrane was allowed to stand in an oven heated to the heat treatment temperature described in Table 7 for the heat treatment time described in Table 7. Thereafter, the membrane was washed with hot water at 90°C for 2 minutes to obtain a composite semipermeable membrane. The evaluation of the composite semipermeable membrane thus obtained showed that each of the TDS removal rate, membrane permeate flux, and boron removal rate was as shown in Table 7.

[Table 7]

| | Interfacial polycondensation temperature (°C) | Thermal treatment temperature (°C) | Thermal treatment time (sec) | TDS removal rate (%) | Membrane permeable flux ($m^3/m^2$/day) | Boron removal rate (%) |
|---|---|---|---|---|---|---|
| Example 12 | 40 | 70 | 45 | 99.79 | 0.67 | 94.1 |
| Example 13 | 40 | 90 | 20 | 99.75 | 0.67 | 93.7 |
| Example 14 | 40 | 120 | 15 | 99.77 | 0.68 | 93.9 |
| Example 15 | 70 | 150 | 15 | 99.70 | 0.63 | 94.3 |
| Example 16 | 70 | 150 | 15 | 99.67 | 0.70 | 93.1 |
| Example 17 | 25 | 70 | 45 | 99.71 | 0.74 | 93.0 |
| Example 18 | 40 | 90 | 20 | 99.80 | 0.89 | 95.5 |
| Example 19 | 40 | 120 | 15 | 99.80 | 0.92 | 95.1 |
| Comparative Example 7 | 25 | absence of thermal treatment | absence of thermal treatment | 99.68 | 0.71 | 92.3 |
| Comparative Example 8 | 80 | 120 | 15 | 99.74 | 0.55 | 93.9 |
| Comparative Example 9 | 80 | absence of thermal treatment | absence of thermal treatment | 99.55 | 0.81 | 91.5 |
| Comparative Example 10 | 40 | 120 | 15 | 99.61 | 0.73 | 92.4 |
| Comparative Example 11 | 40 | absence of thermal treatment | absence of thermal treatment | 99.71 | 0.76 | 92.0 |
| Comparative Example 12 | 40 | 50 | 90 | 99.67 | 0.72 | 92.2 |
| Comparative Example 13 | 40 | 180 | 15 | 99.41 | 0.53 | 94.0 |
| Comparative Example 14 | 40 | 120[Note)] | 15 | 99.70 | 0.74 | 92.3 |
| [Note)] Thermal treatment temperature after removal of excess solution | | | | | | |

(Examples 18, 19)

The treatment was carried out in the same manner as in Example 1 except changing the composite semipermeable membrane treated, m-PDA concentration, immersion time, and sodium nitrite concentration to the conditions described in Table 9. The evaluation of the composite semipermeable membrane of each Example showed that each value of the membrane permeate flux, TDS removal rate, and boron removal rate was as shown in Table 7. The yellow index and actual length of the separating functional layer of the composite semipermeable membrane of each Example are described in Table 8. Further, the m-PDA concentration in the complex of the polyamide separation-functional layer and the porous support layer after immersion in the m-PDA solution of each Example is described in Table 9.

[Table 8]

| | Yellow index | Actual length (μm) |
|---|---|---|
| Example 18 | 14 | 3.0 |

(continued)

| | Yellow index | Actual length (μm) |
|---|---|---|
| Example 19 | 14 | 3.0 |

[Table 9]

| | Composite semipermeable membrane | m-PDA solution immersion | | m-PDA concentration in a complex of the polyamide separation-functional layer and the porous support layer after m-PDA solution immersion ($\times 10^{-6}$ mol/g) | Sodium nitrite concentration (wt%) |
|---|---|---|---|---|---|
| | | m-PDA concentration (ppm) | immersion time (min) | | |
| Example 18 | Example 13 | 300 | 60 | 52 | 0.4 |
| Example 19 | Example 14 | 300 | 60 | 52 | 0.5 |

(Comparative Example 14)

The porous support layer obtained in Reference Example 1 was immersed in a 3.8% by weight aqueous solution of m-PDA for 2 minutes, and the support layer was slowly pulled up in the vertical direction. Nitrogen was blown thereto from an air nozzle to remove the excess aqueous solution from the porous support layer surface. Thereafter, an n-decane solution at the interfacial polycondensation temperature described in Table 7 containing 0.165% by weight of trimesic acid chloride was applied thereto such that the whole surface was wet, and the support membrane was left to stand for 10 seconds. Next, to remove the excess solution from the membrane, the membrane was held upright for 1 minute for draining, and the solution was removed from the membrane surface by blowing air at 20°C from an air blower. Then, the membrane was allowed to stand in an oven heated to 120°C for 15 seconds. Thereafter, the membrane was washed with hot water at 90°C for 2 minutes to obtain a composite semipermeable membrane. The evaluation of the composite semipermeable membrane thus obtained showed that each of the TDS removal rate, membrane permeate flux, and boron removal rate was as shown in Table 7.

As described above, the composite semipermeable membrane obtained by the constitution [2] of the present invention has high salt and boron removal performance and high water permeation performance.

INDUSTRIAL APPLICABILITY

The composite semipermeable membrane according to the present invention can be suitably used particularly in desalination of brackish water and sea water.

DESCRIPTION OF SYMBOLS

1: Porous support layer
M: Actual length of separating functional layer surface of the part corresponding to 1 μm-length of porous support layer

## Claims

1. A composite semipermeable membrane having a chemically treated polyamide separation-functional layer on a porous support layer, wherein the polyamide separation-functional layer has a yellow index, measured according to Japanese Industrial Standard JIS K 7373, of 10 to 40, and the actual length of the polyamide separation-functional layer per 1 μm-length of the porous support layer, measured with a cross-section photograph of an ultrathin section using a TEM of a sample embedded in a water-soluble polymer, stained with $OsO_4$, and cut with an ultramicrotome, is from 2 μm to 5 μm, wherein the polyamide separation-functional layer having primary amino groups retained as a compound in the separation-functional layer of the composite semipermeable membrane, is chemically treated

by contacting it with a reagent that reacts with the primary amino groups and forms a diazonium salt or derivatives thereof and further reacted with an aromatic compound that reacts with the diazonium salt or derivatives thereof to form azo groups.

2. The composite semipermeable membrane according to claim 1, wherein a substrate of the porous support layer is formed from polyester, and the substrate is a filament nonwoven fabric.

3. The composite semipermeable membrane according to claim 2, wherein, for the substrate comprising a filament nonwoven fabric, a degree of filament orientation of the filaments arranged on the opposite side to the porous support is from 0° to 25°, wherein the degree of fiber orientation is the average angle of the fibers constituting the nonwoven fabric substrate determined when the film-forming direction and the direction perpendicular to the film-forming direction is assumed to be 0° and 90° respectively,_and a difference in the degree of filament orientation between the filaments arranged on opposite side to the porous support and the filaments arranged on the porous support side is from 10° to 90°.

4. The composite semipermeable membrane according to claim 1, wherein the polyamide separation-functional layer is prepared by polycondensation of polyfunctional amines with polyfunctional halides, wherein the polyamide separation-functional layer is formed by the steps of (A) interfacial polycondensation in which polyfunctional amines and polyfunctional acid halides are brought into contact at 40°C to 70°C and subsequent (B) heat treatment at 70°C to 150°C.

## Patentansprüche

1. Semipermeable Verbundmembran mit einer chemisch behandelten Polyamid-Trennfunktionsschicht auf einer porösen Trägerschicht, wobei die Polyamid-Trennfunktionsschicht einen gelben Index, gemessen gemäß dem japanischen Industriestandard JIS K 7373, von 10 bis 40 aufweist und die tatsächliche Länge der Polyamid-Trennfunktionsschicht pro 1μm Länge der porösen Trägerschicht, gemessen mit einer Querschnittsfotografie eines ultradünnen Schnitts unter Verwendung eines TEM einer Probe, die in ein wasserlösliches Polymer eingebettet, mit $OsO_4$ gefärbt, und mit einem Ultramikrotom geschnitten ist, 2 μm bis 5 μm beträgt, wobei die Polyamid-Trennfunktionsschicht, die primäre Aminogruppen aufweist, die als Verbindung in der Trennfunktionsschicht der semipermeablen Verbundmembran gehalten werden, chemisch dadurch behandelt ist, dass diese mit einem Reaktionsmittel in Kontakt gebracht wird, das mit den primären Aminogruppen reagiert und ein Diazoniumsalz oder Derivate davon bildet, und zudem mit einer aromatischen Verbindung reagiert, die mit dem Diazoniumsalz oder Derivaten davon unter Bildung von Azogruppen reagiert.

2. Semipermeable Verbundmembran nach Anspruch 1, wobei ein Substrat der porösen Trägerschicht aus Polyester gebildet ist, und das Substrat ein Filament-Vliesstoff ist.

3. Semipermeable Verbundmembran nach Anspruch 2, wobei für das Substrat, das einen Filament-Vliesstoff umfasst, ein Grad der Filament-Ausrichtung der Filamente, die auf der dem porösen Träger gegenüberliegenden Seite angeordnet sind, 0° bis 25° beträgt, wobei der Grad der Faserausrichtung der durchschnittliche Winkel der Fasern ist, die das Vliesstoffsubstrat bilden, der bestimmt ist, wenn die Schichtbildungsrichtung und die Richtung senkrecht zur Schichtbildungsrichtung jeweils mit 0° und 90° angenommen wird; und eine Differenz des Grads einer Filament-Ausrichtung zwischen den Filamenten, die auf der gegenüberliegenden Seite des porösen Trägers angeordnet sind, und den Filamenten, die auf der porösen Trägerseite angeordnet sind, 10° bis 90° beträgt.

4. Semipermeable Verbundmembran nach Anspruch 1, wobei die Polyamid-Trennfunktionsschicht durch eine Polykondensation von polyfunktionellen Aminen mit polyfunktionellen Halogeniden hergestellt ist, wobei die Polyamid-Trennfunktionsschicht durch die Schritte (A) einer Grenzflächenpolykondensation, wobei polyfunktionelle Amine und polyfunktionelle Säurehalogenide bei 40° C bis 70° C in Kontakt gebracht, und anschließend (B) bei 70° C bis 150° C wärmebehandelt werden.

## Revendications

1. Membrane semi-perméable composite ayant une couche fonctionnelle de séparation en polyamide traitée chimiquement sur une couche de support poreuse, dans laquelle la couche fonctionnelle de séparation en polyamide a

un indice de jaune, mesuré selon la Norme Industrielle Japonaise JIS K 7373, allant de 10 à 40, et la longueur réelle de la couche fonctionnelle de séparation en polyamide par 1 μm de longueur de la couche de support poreuse, mesurée avec une photographie en coupe d'une section ultramince en utilisant un TEM d'un échantillon incorporé dans un polymère soluble dans l'eau, coloré au $OsO_4$, et coupé avec un ultramicrotome, est de 2 μm à 5 μm, où la couche fonctionnelle de séparation en polyamide ayant des groupes amino primaires retenus comme un composé dans la couche fonctionnelle de séparation de la membrane semi-perméable composite, est traitée chimiquement en la mettant en contact avec un réactif qui réagit avec les groupes amino primaires et forme un sel de diazonium ou ses dérivés et amenée en outre à réagir avec un composé aromatique qui réagit avec le sel de diazonium ou ses dérivés pour former des groupes azoïques.

**2.** Membrane semi-perméable composite selon la revendication 1, dans laquelle un substrat de la couche de support poreuse est formé de polyester, et le substrat est un tissu non tissé à filaments.

**3.** Membrane semi-perméable composite selon la revendication 2, dans laquelle, pour le substrat comprenant un tissu non tissé à filaments, un degré d'orientation de filament des filaments agencés sur le côté opposé au support poreux est de 0° à 25°, où le degré d'orientation des fibres est l'angle moyen des fibres constituant le substrat de tissu non tissé déterminé lorsque la direction de formation de film et la direction perpendiculaire à la direction de formation de film sont supposées être respectivement de 0° et 90°, et une différence dans le degré d'orientation des filaments entre les filaments agencés sur le côté opposé au support poreux et les filaments agencés sur le côté du support poreux est de 10° à 90°.

**4.** Membrane semi-perméable composite selon la revendication 1, dans laquelle la couche fonctionnelle de séparation en polyamide est préparée par polycondensation d'amines polyfonctionnelles avec des halogénures polyfonctionnels, où la couche fonctionnelle de séparation en polyamide est formée par les étapes de (A) polycondensation interfaciale dans laquelle des amines polyfonctionnelles et des halogénures d'acide polyfonctionnel sont mis en contact à une température entre 40°C et 70°C et de traitement thermique (B) ultérieur à une température entre 70°C et 150°C.

[Figure 1]

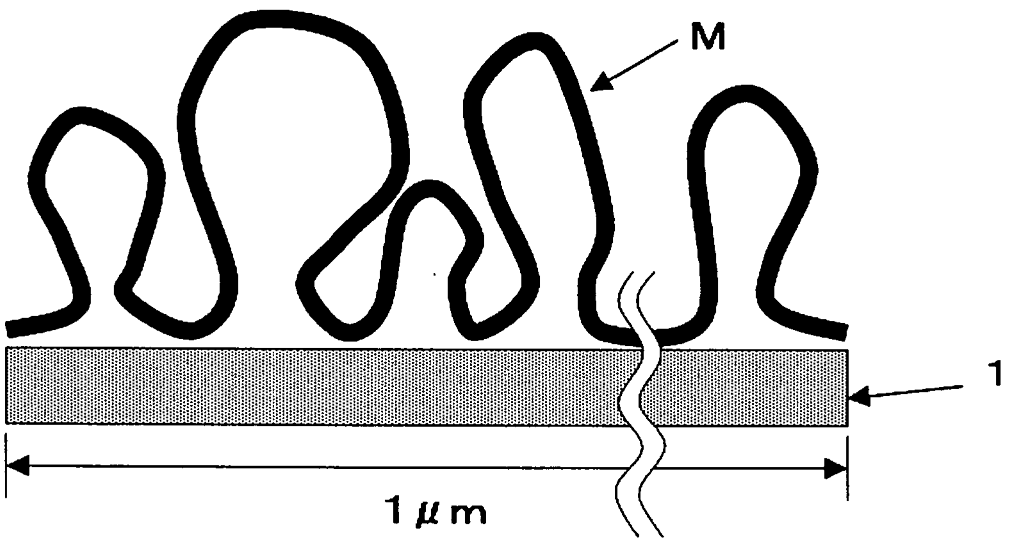

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11019493 A
- JP 2001259388 A
- JP 2007090192 A
- JP 9019630 A
- EP 0275027 A
- JP 2005186059 B
- JP 2078428 A

### Non-patent literature cited in the description

- *Office of saline Water Research and Development Progress Report,* 1968, (359